# EUROPÄISCHE PATENTANMELDUNG

(11) **EP 4 175 086 A1**
(43) Veröffentlichungstag der Anmeldung: **03.05.2023**
(21) Anmeldenummer: 22202081.0
(22) Anmeldetag: 18.10.2022
(51) Int. Cl.: H02G 3/18, H02G 3/38, B28B 23/00, H02G 1/08, E04B 5/48, H02G 1/00, H02G 9/06, E04F 15/024, F16L 5/00, G02B 6/44, E04C 2/52, H02G 3/06, G06Q 50/08, E03F 3/02, F16L 1/028, H02G 3/04

(54) **VERWENDUNG EINES LEERROHRSYSTEMS**

(30) Priorität: 29.10.2021 DE 102021128308
(71) Anmelder: Hauff-Technik GmbH & Co. KG, 89568 Hermaringen (DE)
(72) Erfinder: SCHEURING, Horst, 89542 Herbrechtingen (DE); KURZ, Ralf, 89537 Giengen (DE)
(74) Vertreter: König Szynka Tilmann von Renesse Patentanwälte Partnerschaft mbB München

(57) **Zusammenfassung**

Die Erfindung betrifft die Verwendung eines Leerrohrsystems, welches ein erstes und ein zweites Leerrohr sowie ein erstes Bodengehäuse aufweist, wobei das Leerrohrsystem außerhalb eines Gebäudes, aber auf dessen Grundstück solchermaßen in einen Boden eingebaut wird, dass das erste Leerrohr das Gebäude und das erste Bodengehäuse miteinander verbindet und sich das zweite Leerrohr vom ersten Bodengehäuse weg erstreckt, wobei in dem Leerrohrsystem eine Medienleitung verlegt wird, die in dem Gebäude an ein verbraucherseitiges Ende eines Medienhausanschlusses angeschlossen wird oder ist.

## Beschreibung

Die vorliegende Erfindung betrifft die Verwendung eines Leerrohrsystems zum Einbau in den Boden.

Der Einbau in den Boden erfolgt hierbei in direkter Nähe eines Gebäudes, also auf dessen Grundstück. Das Leerrohrsystem wird bspw. im Garten des Gebäudes bzw. auch im Bereich einer Einfahrt oder von Zuwegen in den Boden eingebaut. Bekannt ist die Verwendung von Leerrohren bei der Anbindung eines Gebäudes, werden dabei nämlich die einzelnen Medienleitungen (z. B. für Strom, Wasser und ggf. Gas) in Leerrohren zwischen einer straßenseitigen Anschlussstelle und dem Gebäude verlegt. Sie erstrecken sich also im Erdreich zum Gebäude hin und über eine sog. Hauseinführung in das Gebäude hinein. Die Hauseinführung bildet dann einen Teil des sog. Hausanschlusses, zu dem je nach Medium bspw. auch ein Zähler und Verteiler gehören kann.

Der vorliegenden Erfindung liegt das technische Problem zugrunde, eine vorteilhafte Verwendung eines Leerrohrsystems bzw. ein vorteilhaftes Leerrohrsystem als Gegenstand der Verwendung anzugeben.

Dies wird erfindungsgemäß mit der Verwendung nach Anspruch 1 gelöst. Das entsprechende Leerrohrsystem weist mindestens zwei Leerrohre und zusätzlich mindestens ein Bodengehäuse auf. Es wird so in den Boden eingebaut, dass ein erstes Leerrohr ein erstes Bodengehäuse mit dem Gebäude verbindet und sich ein zweites Leerrohr (das von dem ersten verschieden ist) von dem Bodengehäuse weg erstreckt. Ferner wird in dem Leerrohrsystem eine Medienleitung verlegt, die aber im Unterschied zum Beispiel eingangs nicht das Gebäude anbindet, sondern das entsprechende Medium aus dem Gebäude herausführt, es also im Garten bzw. allgemein auf dem Grundstück außerhalb des Gebäudes verfügbar macht. Im Unterschied zum vorstehenden Beispiel ist die Medienleitung im Gebäude nicht am versorgerseitigen, sondern am verbraucherseitigen Ende des Medienhausanschlusses angeschlossen.

Mit dem vorliegenden Gegenstand wird das Medium also außerhalb des Gebäudes, bei dem es sich insbesondere um ein Wohngebäude, vorzugsweise ein Einfamilienhaus handeln kann, auf dessen Grundstück verfügbar gemacht. Dort kann dann ein entsprechender Verbraucher oder Verbraucheranschluss platziert werden (der über die Medienleitung aus dem Gebäude heraus versorgt wird), bspw. ein Strom- oder Wasser- bzw. auch Datenanschluss. Konkret kann damit also bspw. im Garten ein elektrischer Rasenmäher bzw. dessen Ladegerät oder auch allgemein eine Ladestation, z. B. für ein Elektrofahrzeug ("*Wallbox*")*,* oder z. B. eine Beleuchtungseinheit, etwa eine Leuchte, oder auch eine Wärmepumpe betrieben bzw. eine Daten-/WLAN-Versorgung im Außenbereich geschaffen werden.

Das für die Verlegung der Medienleitung genutzte Leerrohrsystem weist dabei zusätzlich das Bodengehäuse auf, das bspw. als Zugangspunkt dienen kann. Im Vergleich zu einem durchgehenden Leerrohr kann es z. B. einfacher sein, die Medienleitung schrittweise hindurchzufädeln bzw. -ziehen, bspw. in einem ersten Schritt zwischen Bodengehäuse und Gebäude und dann in einem zweiten Schritt im zweiten Leerrohr. Der mit dem Bodengehäuse zur Verfügung stehende Innenraum kann auch zum Unterbringen von Verbindungs- und insbesondere Verzweigungsstellen der Medienleitung genutzt werden. Im Gehäuseinnenraum können also zwei Abschnitte der Medienleitung, die dann z. B. in unterschiedlichen Leerrohren von dem Bodengehäuse weg verlaufen, miteinander verbunden sein. Je nach Leitungstyp kann dort bspw. ein *Fitting* (Verbindung von Leerrohren) oder eine Klemme (Kabel, insbesondere Elektrokabel), vorzugsweise in einer Verteilerdose, angeordnet werden.

Weitere bevorzugte Ausgestaltungen sind Gegenstand der gesamten Offenbarung und finden sich insbesondere in den abhängigen Ansprüchen, wobei in der Darstellung der Merkmale nicht immer im Einzelnen zwischen den unterschiedlichen Anspruchskategorien, also zwischen Vorrichtungs- bzw. Verfahrens-/Verwendungsaspekten unterschieden wird. Die Schilderung einer bestimmten Vorgehensweise bzw. Verwendung ist bspw. auch auf eine Installationsanordnung (mit Leerrohrsystem und z. B. Gebäude und Grundstück) zu lesen, die sich aus der Verwendung ergibt.

Das Bodengehäuse weist eine Seitenwand auf, die seinen Gehäuseinnenraum horizontal begrenzt. Nach unten kann es im Allgemeinen auch offen sein, bevorzugt weist es jedoch eine mit der Seitenwand einstückige Bodenwand auf, die den Gehäuseinnenraum nach unten begrenzt. Der Gehäuseinnenraum kann bspw. ein Volumen von mindestens 2 Liter, 3 Liter oder 4 Liter haben, mögliche Obergrenzen können bspw. bei höchstens 60 Liter, 55 Liter, 50 Liter, 45 Liter, 40 Liter, 35 Liter, 30 Liter, 25 Liter, 20 Liter, 15 Liter, 10 Liter bzw. 8 Liter liegen. Damit kann einerseits hinreichend Platz für die vorstehend geschilderten Funktionen zur Verfügung stehen, andererseits aber der Einbau in den Boden keinen übermäßigen Aufwand erfordern. Die Leerrohre münden in den Gehäuseinnenraum, bevorzugt sind bzw. werden sie dazu an eine jeweilige Anschlussstelle des Bodengehäuses angesetzt, insbesondere eingeschoben (siehe unten im Detail).

Im Allgemeinen können die Leerrohre auch von unten in das Bodengehäuse hineinlaufen, können also in dessen Bodenwand Anschlussstellen vorgesehen sein. Bevorzugt laufen sie jedoch mit zumindest anteilig horizontaler Erstreckung in das Bodengehäuse hinein, vorzugsweise im Wesentlichen parallel zur Horizontalen, was bspw. die Verlegetiefe verringern und insbesondere im Endkundensegment von Interesse sein kann. Generell kann ein jeweiliges Leerrohr für sich einstückig oder aus mehreren aneinandergesetzten, z. B. über eine jeweilige Muffe oder ein Fitting miteinander verbundenen, Leerrohrteilstücken aufgebaut sein. Dies gilt analog für die Medienleitung, die durchgehend oder auch aus mehreren Leitungsteilstücken aufgebaut sein kann, welche funktional, also das entsprechende Medium leitend, miteinander verbunden sind.

In einer Aufsicht betrachtet, also vertikal zur Horizontalen daraufblickend, münden das erste und zweite Leerrohr in bevorzugter Ausgestaltung gewinkelt zueinander in das Bodengehäuse. "Gewinkelt" meint nicht parallel, sie können bspw. einen Winkel von mindestens 30°, 60° bzw. 80° einschließen, wobei mögliche Obergrenzen bspw. bei höchstens 150°, 120° bzw. 100° liegen können. Sie können miteinander bspw. eine L-Form oder, sofern ein drittes Leerrohr vorgesehen ist (siehe unten), auch eine T-Form bilden. Selbstverständlich können auch mehr als drei Leerrohre angeschlossen werden, die sich dann sternförmig erstrecken, insbesondere vier Leerrohre in einer Kreuzform. Soweit generell die Position, Anordnung und Ausrichtung des Leerrohrsystems bzw. seiner Komponenten beschrieben wird, bezieht sich dies ohne ausdrücklich gegenteilige Angabe auf den im Boden eingebauten Zustand, also die fertige Installation.

In bevorzugter Ausgestaltung wird bzw. ist das Bodengehäuse so in den Boden eingebaut, dass ein den Gehäuseinnenraum nach oben begrenzender Deckel unterhalb einer Oberkante des fertigen Bodenaufbaus liegt. Der Deckel kann bspw. um mindestens 1 cm, 3 cm bzw. 5 cm nach unten versetzt sein, wobei mögliche Obergrenzen, die davon unabhängig offenbart sein sollen, bspw. bei höchstens 30 cm bzw. 20 cm liegen können. Die Oberkante ist dabei die Oberfläche der obersten Bodenschicht, die je nach Position auf dem Grundstück von Schüttgut, z. B. Kies oder Mutterboden, oder auch einem Plattenbelag gebildet werden kann. In anderen Worten ist das eingebaute Bodengehäuse dann bspw. allumseitig mit Bodenmaterial umgeben, vorzugsweise zumindest anteilig mit Schüttgut, optional zumindest anteilig auch mit Beton oder einem Plattenbelag.

Den Deckel kann bspw. eine Deckelwand bilden, die einstückig, insbesondere monolithisch mit der Seitenwand geformt sein kann. "Einstückig" meint nicht zerstörungsfrei trennbar, "monolithisch" meint aus demselben durchgehenden Material. Zum Öffnen kann die Deckelwand dann ausgeschlagen und, je nach Bedarf, dann später durch einen anderen Deckel bzw. Montageaufsatz ersetzt werden. Alternativ zur Deckelwand kann aber auch ein reversibel abnehm- und wieder aufsetzbarer Deckel vorgesehen sein (bereits beim Einbau des Bodengehäuses), der bspw. an der Seitenwand verschraubt oder vorzugsweise daran verrastet sein kann.

In bevorzugter Ausgestaltung wird in einem späteren Verfahrens- bzw. Montagestadium ein Bodenbereich oberhalb des Deckels entfernt, wird je nach Bodenbelag also aufgegraben und/oder ein Pflasterbelag entfernt. Das Bodengehäuse wird freigelegt, sodass der Deckel von oben zugänglich ist. Bevorzugt wird der Deckel dann abgenommen, z. B. für Verlegearbeiten, also zum Hindurchziehen bzw. - schieben der Medienleitung. Damit ist der Gehäuseinnenraum von oben zugänglich und kann die Medienleitung in das Leerrohr eingeschoben oder aus diesem entgegengenommen werden. Unabhängig von der eigentlichen Leitungsverlegung kann das Öffnen des Deckels auch Anschluss- oder Verzweigungsarbeiten an der Medienleitung dienen, kann also bspw. ein Kabel (Elektro- oder Datenkabel) verzweigt und die Verzweigungsstelle (Klemme, insbesondere in Verteilerdose/Kabelgehäuse) in dem Gehäuseinnenraum untergebracht werden. Im Allgemeinen kann das Bodengehäuse danach auch wieder verschlossen und kann der Boden oberhalb wieder hergestellt werden.

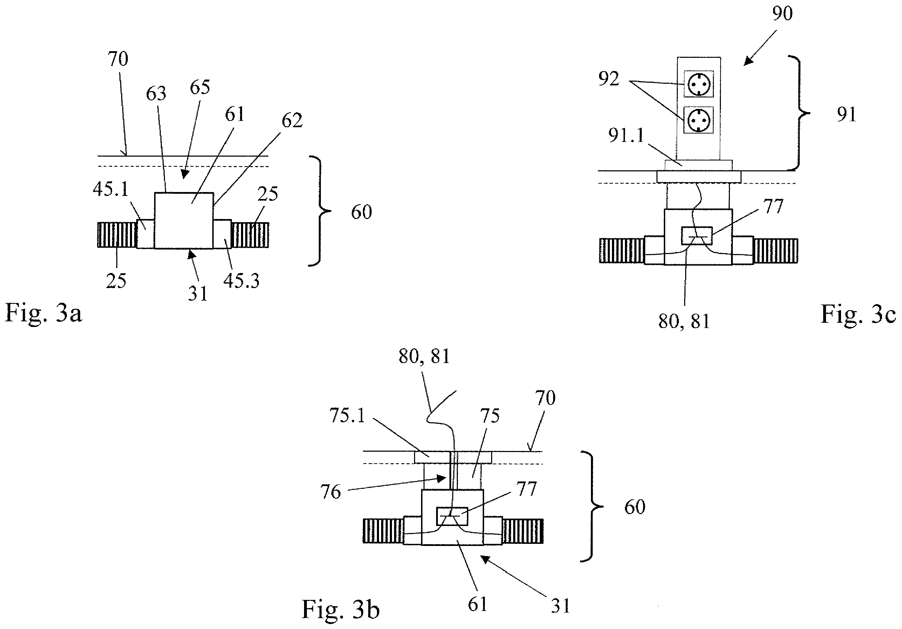

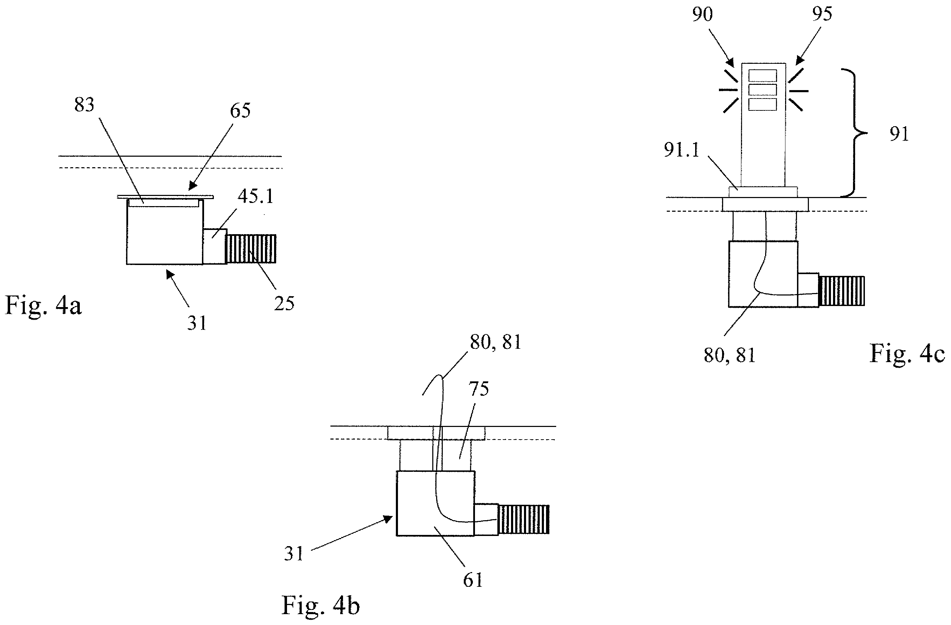

In bevorzugter Ausgestaltung wird jedoch auf dem Bodengehäuse ein Verbraucher oder Verbraucheranschluss platziert, wobei das Bodengehäuse als Sockel genutzt wird. Da es ohnehin bereits im Boden sitzt, schafft es Stabilität und kann es zur Verankerung genutzt werden. Bevorzugt wird dazu ein Montageaufsatz auf das Bodengehäuse gesetzt, besonders bevorzugt in Austausch gegen den Deckel. Der Montageaufsatz kann vergleichsweise massiv ausgeführt sein, etwa aus einem Hartkunststoff oder Polymerbeton. Unabhängig vom Material im Einzelnen kann der Verbraucher oder Verbraucheranschluss dann auf dem Montageaufsatz verschraubt werden, bspw. über eine Stehle (die dann den eigentlichen Verbraucher/Verbraucheranschluss trägt, vgl. die Figuren 3c, 4c zur Illustration).

Gemäß einer bevorzugten Ausführungsform wird ein Ende des ersten Leerrohrs an eine erste Anschlussstelle und/oder wird ein Ende des zweiten Leerrohrs an eine zweite Anschlussstelle des ersten Bodengehäuses gesetzt, wobei das jeweilige Leerrohr an der jeweiligen Anschlussstelle verrastet. Bevorzugt wird das Ende des Leerrohrs in die Anschlussstelle eingeschoben und greift das Rastmittel in die Außenwandfläche des Leerrohrs ein, sodass bspw. für die Leitungsverlegung ein freier Querschnitt zur Verfügung steht.

Gemäß einer bevorzugten Ausführungsform ist die erste und/oder zweite Anschlussstelle zuvor mit einem Blindverschluss verschlossen, der bei bzw. vor dem Ansetzen des jeweiligen Leerrohrs entfernt wird. Der Blindverschluss ist bevorzugt monolithisch mit dem übrigen Bodengehäuse geformt, bevorzugt monolithisch mit dessen Seitenwand (wenn die Anschlussstelle in der Seitenwand sitzt, was bevorzugt ist). Die Ausstattung mit dem Blindverschluss schafft Flexibilität, ein Anwender kann bspw. vor Ort entscheiden, etwa in Abhängigkeit von der Bodenbeschaffenheit, von welcher Seite er das Leerrohr an das Bodengehäuse anschließt.

Bevorzugt weist das Anschlussgehäuse eine weitere Anschlussstelle auf, also insgesamt mindestens drei Anschlussstellen (und bspw. nicht mehr als acht oder sechs), besonders bevorzugt sind vier Anschlussstellen, die weiter bevorzugt in Aufsicht betrachtet kreuzförmig liegen. Unabhängig von der Anzahl im Einzelnen können im Ausgangszustand bevorzugt sämtliche Anschlussstellen jeweils mit einem Blindverschluss verschlossen sein. Beim in den Boden eingebauten und angeschlossenen Bodengehäuse sind dann der Anzahl an Leerrohren entsprechend die Blindverschlüsse entfernt. Es können sämtliche Anschlussstellen belegt oder auch eine bzw. mehrere unbelegt sein und verschlossen bleiben. Generell kann die Anschlussstelle bevorzugt sowohl mit dem Rastmittel (siehe vorne) als auch mit dem Blindverschluss ausgestattet sein, wobei Letzterer dann das Rastmittel bevorzugt nach außen (zum Gehäuseäußeren hin) abdeckt, sodass das Rastmittel vor Verschmutzung etc. geschützt sein kann.

In bevorzugter Ausgestaltung können mehr als zwei Leerrohre an das erste Bodengehäuse angeschlossen sein, also ein drittes und optional auch ein viertes Leerrohr (hinsichtlich möglicher Obergrenzen vgl. die Anmerkungen zu den Anschlussstellen). Im Falle der vier kreuzförmig angeordneten Anschlussstellen können also in Aufsicht betrachtet drei Leerrohre T-förmig oder vier Leerrohre kreuzförmig angeschlossen sein. Mit mehr als zwei Leerrohren kann insbesondere auch eine vorstehend erwähnte Unterverteilung realisiert werden, kann also die Medienleitung über das erste Leerrohr ins erste Bodengehäuse geführt und dort auf das zweite und dritte (und ggf. vierte) Leerrohr aufgeteilt werden.

Gemäß einer bevorzugten Ausführungsform ist bzw. wird das Bodengehäuse an einer Aufstellvorrichtung angeordnet, welche das Bodengehäuse trägt und in Position hält, wenn es in den Boden eingebaut wird. Die Aufstellvorrichtung gibt dem Bodengehäuse also seine Position vor, wenn es mit Bodenmaterial und/oder Beton umfüllt wird. Vor diesem Umfüllen kann bspw. ein Graben ausgeschachtet sein, wobei die Aufstellvorrichtung das Bodengehäuse dann im Prinzip freitragend halten kann. Dazu kann die Aufstellvorrichtung einen Ständer aufweisen, etwa mit einem vergleichsweise großen Sockelteil oder insbesondere mit einem Erdspieß. Letzterer lässt sich in den Boden eintreiben, was Stabilität schafft. An dem dem Ständer bzw. Erdspieß vertikal entgegengesetzten Ende der Aufstellvorrichtung kann das Bodengehäuse montiert sein, bspw. angeschraubt.

Die Aufstellvorrichtung ist bevorzugt höhenverstellbar ausgeführt, sodass vor dem Umfüllen mit Bodenmaterial die vertikale Position des Bodengehäuses angepasst werden kann. Damit lässt sich die Position des Bodengehäuses gut auf die gewünschte Höhe zur Oberkante des fertigen Bodenaufbaus einstellen, vergleiche dazu auch die vorstehenden Anmerkungen. Die Höhenverstellbarkeit kann bspw. mit in vertikaler Richtung zueinander verschiebbaren Stangen realisiert sein, etwa mit einem Teleskopmechanismus.

Gemäß einer bevorzugten Ausführungsform weist das Leerrohrsystem ein zweites Bodengehäuse auf, welches über das zweite Leerrohr mit dem ersten Bodengehäuse verbunden ist bzw. wird. Das zweite Leerrohr kann die beiden Bodengehäuse dabei direkt miteinander verbinden, sodass sein eines Ende an das erste Bodengehäuse und sein anderes, entgegengesetztes Ende an das zweite Bodengehäuse angeschlossen ist. Alternativ kann die Verbindung aber auch über ein oder mehrere weitere Leerrohre, sowie optional über ein oder mehrere weitere Bodengehäuse erfolgen. Generell kann ein jeweiliges Leerrohr bspw. eine Länge von mindestens 1,5 m, vorzugsweise mindestens 2 m, haben, wobei mögliche Obergrenzen bspw. bei höchstens 15 m, 12 m, 10 m, 8 m bzw. 6 m liegen können. In entsprechendem Abstand, entlang des jeweiligen Leerrohrs genommen, können die Bodengehäuse voneinander entfernt sein.

Insgesamt kann das Leerrohrsystem auch mehr als zwei Bodengehäuse aufweisen, bspw. mindestens vier oder fünf Bodengehäuse (mit möglichen Obergrenzen bei z. B. höchstens 25, 15 bzw. 10), die dann auf dem Grundstück mit den Leerrohren, über welche sie miteinander verbunden sind, ein Netzwerk bilden. Dabei kann ein jeweiliges Bodengehäuse "nur" als Zwischenpunkt für die Leitungsverlegung und/oder der Positionierung eines Verbrauchers/Verbraucheranschlusses dienen.

In bevorzugter Ausgestaltung kann ein drittes Leerrohr vorgesehen sein, welches das zweite Bodengehäuse mit dem Gebäude verbindet. Damit besteht dann nicht nur über das erste Leerrohr (und das erste Bodengehäuse) eine Erschließungsmöglichkeit vom Gebäude aus, sondern auch über das dritte Leerrohr und das zweite Bodengehäuse. Das erste und dritte Leerrohr können dabei bevorzugt an unterschiedlichen Seiten des Gebäudes an dieses angeschlossen sein, also in Aufsicht betrachtet an unterschiedlichen Außenseiten des Gebäudes (die z. B. zueinander um 90° versetzt oder einander entgegengesetzt liegen können).

Gemäß einer bevorzugten Ausführungsform sind bzw. werden zumindest einige der Bodengehäuse entlang einer Einfassung und/oder eines Wegs auf dem Grundstück platziert. Die Einfassung kann bspw. die Grundstücksgrenze selbst sein, ebenso kann es sich aber um eine Grenze zwischen unterschiedlichen Bereichen auf dem Grundstück handeln, etwa eine Beeteinfassung etc. Die Oberfläche des Wegs kann bspw. von verdichtetem Kies oder insbesondere einem Pflasterbelag gebildet werden. Unabhängig von diesen Details kann mit den entlang des Wegs/der Einfassung positionierten Bodengehäusen, die insbesondere äquidistant angeordnet sein können, z. B. eine Möglichkeit zur späteren Positionierung von Leuchten geschaffen werden.

Sofern generell mehrere Bodengehäuse relativ zueinander positioniert werden, insbesondere entlang eines Wegs und/oder einer Einfassung, kann auch nicht nur eine horizontale, sondern auch eine vertikale Ausrichtung relativ zueinander von Interesse und Vorteil sein. Die Bodengehäuse können bspw. entlang eines Schnurgerüsts oder auch eines Lasers bzw. einer anderen Ausrichtungslinie ausgerichtet werden, bspw. wenn der Weg bzw. die Einfassung ein Gefälle hat. In allgemeinen Worten kann generell eine Ausrichtung mehrerer Bodengehäuse derart von Vorteil sein, dass sich diese entlang einer Linie erstrecken, wobei die Linie z. B. auch zur Horizontalen verkippt sein kann, etwa um mindestens 5° oder 10° (mit möglichen Obergrenzen bei z. B. höchstens 45° bzw. 35°. Eine zur Horizontalen gewinkelte, oder umgekehrt bei Geländegefälle bewusst in die Horizontale gebrachte, Ausrichtung mehrerer Anschlussgehäuse kann dabei besonders gut erreicht werden, wenn diese jeweils an einer Aufstellvorrichtung angeordnet sind, insbesondere jeweils einer höhenverstellbaren Aufstellvorrichtung (siehe vorne im Detail).

In bevorzugter Ausgestaltung weist das Leerrohrsystem mindestens drei, vier oder fünf Bodengehäuse auf, die baugleich zueinander sind. Beim Einbau in den Boden können sie dann individuell angepasst werden, bspw. durch Austrennen von Blindverschlüssen, siehe vorne. Trotz der (teilweisen) Baugleichheit untereinander kann es bei Betrachtung des Leerrohrsystems insgesamt aber auch Bodengehäuse abweichender Bauart geben, etwa für befestigte/gepflasterte Bereiche (siehe unten).

Generell wird in bevorzugter Ausgestaltung das Leerrohrsystem in den Boden eingebaut, bevor auf dem Grundstück ein Garten angelegt wird. In diesem Stadium, das bspw. mit der Errichtung des Gebäudes selbst einhergehen kann, ist ggf. auf dem Grundstück ohnehin teils aufgegraben. Nach dem Einbau des Leerrohrsystems wird der Garten angelegt, werden also bspw. Wege und Terrassenflächen erstellt und Pflanzbereiche angelegt. Die Verlegung der Medienleitung erfolgt dann bevorzugt erst danach, insbesondere wird auch erst dann der Verbraucher/Verbraucheranschluss montiert (siehe vorne). Diese Abfolge kann bspw. dahingehend von Vorteil sein, dass die Medienleitung weniger leicht durch Gartenarbeiten beschädigt werden kann.

Gemäß einer bevorzugten Ausführungsform weist das Leerrohrsystem einen Vergusskörper auf, der gebäudeaußenseitig in eine Bodenplatte eines Nebengebäudes eingegossen ist. Bei dem Nebengebäude kann es sich um ein Gartenhaus oder vorzugsweise eine Garage handeln. Der Vergusskörper wird vor dem Errichten des Nebengebäudes positioniert und hält dann in der betonierten Bodenplatte eine Durchgangsöffnung frei, wobei von unten eines oder mehrere Leerrohre in den Vergusskörper münden. Darüber ist der Vergusskörper an das übrige Leerrohrsystem angebunden, kann also die Garage selbst an die Medienversorgung angeschlossen und/oder auch zur Unterverteilung genutzt werden.

Die Erfindung betrifft auch eine Installationsanordnung, die sich bevorzugt als Ergebnis einer vorliegend geschilderten Installation ergibt. Teil der Installationsanordnung können insbesondere auch das Grundstück und das Gebäude selbst sein.

Im Folgenden wird die Erfindung anhand von Ausführungsbeispielen näher erläutert, wobei die einzelnen Merkmale im Rahmen der nebengeordneten Ansprüche auch in anderer Kombination erfindungswesentlich sein können und auch weiterhin nicht im Einzelnen zwischen den unterschiedlichen Anspruchskategorien unterschieden wird.

Im Einzelnen zeigt
- Figur 1: ein Grundstück mit einem Gebäude in einer Aufsicht, auf dem ein Leerrohrsystem installiert ist;
- Figur 2: eine Aufsicht analog Figur 1, ebenfalls mit einem Leerrohrsystem, das aber mit anderen Bodengehäusen ausgestattet ist;
- Figur 3a-c: ein in den Boden eingebautes Bodengehäuse in einer schematischen Seitenansicht, und zwar in unterschiedlichen Stadien der Erschließung;
- Figur 4a-c: ein weiteres in den Boden eingebautes Bodengehäuse in unterschiedlichen Erschließungsstadien;
- Figur 5a-c: ein alternatives in den Boden eingebautes Bodengehäuse in unterschiedlichen Erschließungsstadien;
- Figur 6: eine Hausausführung, über die ein Leerrohrsystem gemäß den Figuren 1 und 2 an das Gebäude angebunden ist.

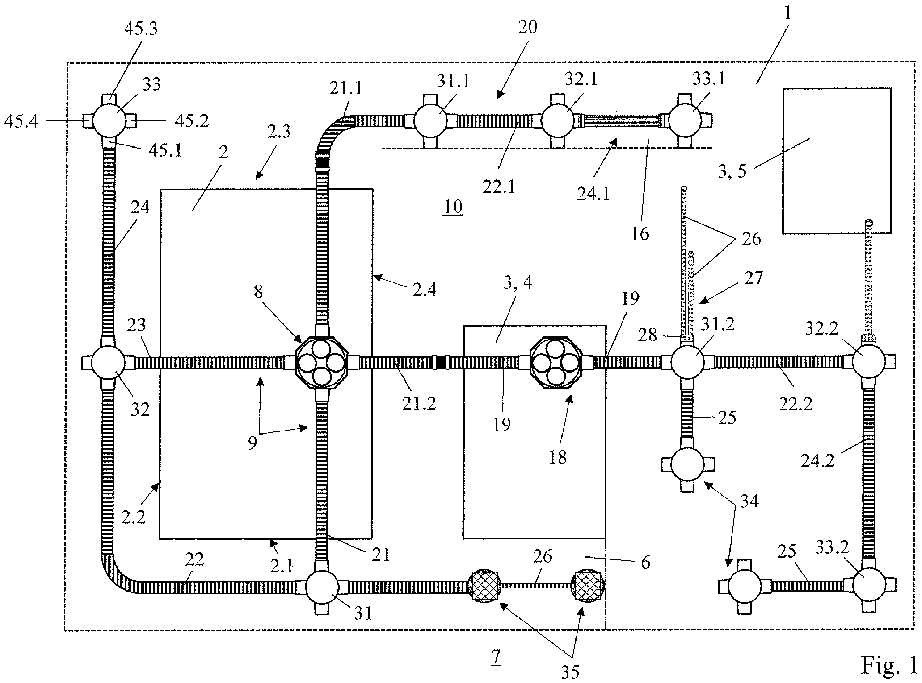

**Figur 1** zeigt ein Grundstück 1 in einer Aufsicht, auf dem ein Gebäude 2 steht, vorliegend ein Einfamilienhaus. Ferner sind auf dem Grundstück 1 Nebengebäude 3, nämlich eine Garage 4 und ein Gartenhaus 5 errichtet. Vor der Garage 4 ist eine Einfahrt 6 angelegt, die an eine Straße 7 grenzt. Das Gebäude 2 ist mit einer Hausausführung 8 ausgestattet, die im vorliegenden Beispiel in die Bodenplatte des Gebäudes 2 eingegossen ist. Von der Hausausführung 8 erstrecken sich Leerrohre 9 weg, diese verlaufen unterhalb der Bodenplatte des Gebäudes 2 und führen in den Außenbereich 10.

Dort ist ein Leerrohrsystem 20 in den Boden eingebaut, welches der Erschließung des Außenbereichs 10 vom Gebäude 2 aus dient. Damit kann bspw. eine Strom- oder auch Wasser- bzw. Datenversorgung außerhalb des Gebäudes 2 realisiert werden, siehe unten im Detail. Das Leerrohrsystem 20 weist ein erstes Leerrohr 21, ein zweites Leerrohr 22. und ein erstes Bodengehäuse 31 auf, wobei sich die folgende Schilderung zunächst auf den Teil links unten in Figur 1 bezieht. Über das zweite Leerrohr 22 ist das erste Bodengehäuse 31 mit einem zweiten Bodengehäuse 32 verbunden, das über ein drittes Leerrohr 23 mit dem Gebäude 2 verbunden ist, und zwar an einer anderen Seite 2.2 als das erste Bodengehäuse 31. Über ein viertes Leerrohr 24 ist auch ein drittes Bodengehäuse 33 angeschlossen, das baugleich zum ersten und zweiten Bodengehäuse 31, 32 ist, im Unterschied dazu aber als Endpunkt des Leerrohrsystems 20 genutzt wird.

Aufgrund der Symmetrie könnte auch das dritte Leerrohr 23 als erstes Leerrohr und das erste hingegen als drittes betrachtet werden, wobei dann auch die Nummerierung der Bodengehäuse entsprechend vertauscht wäre. Generell gibt es in dem Leerrohrsystem 20 mehrere erste Leerrohre 21, erstreckt sich nämlich ein weiteres erstes Leerrohr 21.1 von der Seite 2.3 des Gebäudes 2 weg. Dieses ist an ein weiteres erstes Bodengehäuse 31.1 angeschlossen, und dieses ist über ein weiteres zweites Leerrohr 22.1 an ein weiteres zweites Bodengehäuse 32.1 angeschlossen. Über ein weiteres viertes Leerrohr 24.1 ist ein weiteres drittes Bodengehäuse 33.1 angeschlossen, wobei das weitere vierte Leerrohr 24.1 Teil eines Kabelschutzrohrsystems ist, siehe unten im Detail. Die weiteren Bodengehäuse 31.1-33.1 können, wie schematisch angedeutet, bspw. entlang eines Gartenwegs 16 platziert sein, und/oder an einer Beeteinfassung, sodass dort später z. B. eine Reihe an Leuchten installiert werden kann.

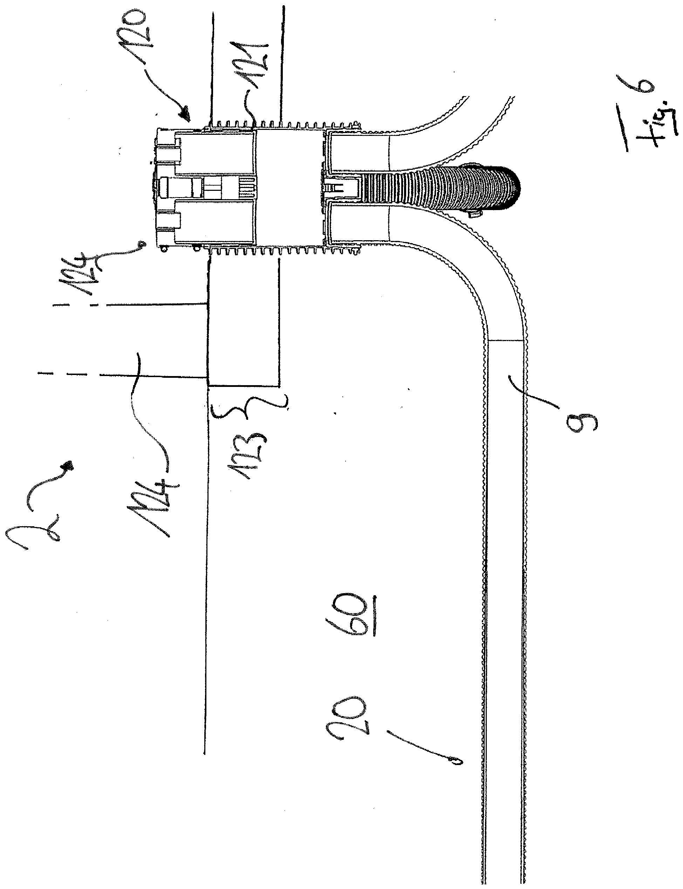

An der Gebäudeseite 2.4 ist ein zusätzliches erstes Leerrohr 21.2 verlegt, welches ein zusätzliches erstes Bodengehäuse 31.2 und darüber zusätzliche Leerrohre und Bodengehäuse 22.2, 24.2, 25; 32.2, 33.2, 34 anbindet. Mit dem Leerrohrsystem 20 lässt sich das Grundstück 1 insgesamt erschließen, können also im Außenbereich 10 an unterschiedlichen Stellen Verbraucher- bzw. Verbraucheranschlüsse positioniert werden. Das zusätzliche erste Bodengehäuse 31.2 ist dabei nicht allein über das zusätzliche erste Leerrohr 21.1, sondern über einen zwischengeschalteten Vergusskörper 18 mit dem Gebäude 2 verbunden. Der Vergusskörper 18 ist wie die Hausausführung 8 topfförmig ausgeführt (vgl. auch Figur 6 zur Illustration) und wird in die Bodenplatte der Garage 4 einbetoniert. Die daran angeschlossenen Leerrohre 19 verlaufen unterhalb der Bodenplatte und dann außerhalb der Garage 4 im Boden weiter.

An das erste Bodengehäuse 31, links unten in Figur 1, sind zusätzlich zu dem zweiten Bodengehäuse 32 zwei Bodengehäuse 35 angeschlossen, die in der Einfahrt 6 positioniert sind. Die Bodengehäuse 35 unterscheiden sich von den bisher diskutierten Bodengehäusen in ihrem Auf- und auch Einbau, sie sind nämlich jeweils aus einer Straßenkappe aufgebaut und werden nicht verdeckt im Boden, sondern bodenbündig eingebaut.

Die meisten Leerrohre des Leerrohrsystems haben eine Nennweite von 75 mm (DN75). An die Bodengehäuse können aber auch Kabelschutzrohre 26 mit kleinerem Durchmesser angeschlossen werden, im Falle des zusätzlichen zweiten Bodengehäuses 31.2 ist ein Kabelschutzrohrsystem 27 vorgesehen. Dieses weist einen einheitlichen Anschlussstutzen 28 auf, von dem sich zwei Kabelschutzrohre 26 weg erstrecken. Vorliegend werden deren Enden frei im Garten positioniert, dort kann später bspw. eine Ladestation für einen Mähroboter platziert werden. Alternativ kann auch am entgegengesetzten Ende ein Anschlussstutzen angeordnet sein und das Kabelschutzrohrsystem auch dort an ein Bodengehäuse angeschlossen werden, siehe oben.

Anhand des dritten Bodengehäuses 33 links oben in Figur 1 ist illustriert, dass daran vier Anschlussstellen 45.1-45.4 vorgesehen sind. In diesem Fall wird nur die erste Anschlussstelle 45.1 genutzt, dort ist das vierte Leerrohr 24 angeschlossen. Die übrigen Anschlussstellen 45.2-45.4 bleiben ungenutzt, sie sind jeweils mit einem einstückig angeformten Blindverschluss verschlossen. Dadurch ist der Gehäuseinnenraum geschützt, und durch Austrennen des Blindverschlusses kann die jeweilige Anschlussstelle nutzbar gemacht werden. Damit sind, wie aus Figur1 ersichtlich, beliebige Anschluss- bzw. Leerrohrkombinationen möglich, kann das Bodengehäuse also nicht nur als Endpunkt, sondern auch als Durchgangsstelle (vgl. Mitte oben in Figur 1) oder L- bzw. T-förmiges Verbindungsstück genutzt werden.

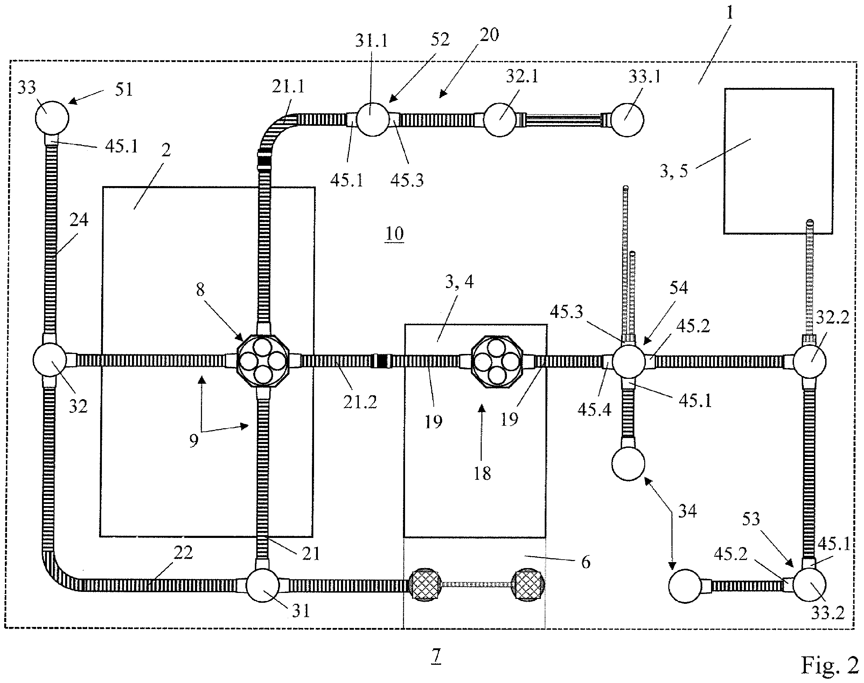

Das Leerrohrsystem 20 gemäß **Figur 2** entspricht in seinem prinzipiellen Aufbau jenem gemäß Figur 1. Generell werden im Rahmen der vorliegenden Offenbarung gleiche Teile bzw. Teile mit gleicher Funktion mit den gleichen Bezugszeichen referenziert und wir insofern immer auch auf die Beschreibung zu den andren Figuren verwiesen. Funktional entsprechen die Bodengehäuse gemäß Figur 2 jenen aus Figur 1, sie gliedern sich im Unterschied dazu jedoch in verschiedene Typen, sind also nicht baugleich zueinander.

Es gibt Endpunkte 51, die nur genau eine Anschlussstelle 45.1 aufweisen. Ferner gibt es Durchgangsstücke 52, die an einander entgegengesetzten Seiten Anschlussstellen 45.1, 45.3 aufweisen. Ferner gibt es L-förmige Verbindungsstücke 53 mit zueinander gewinkelten Anschlussstellen 45.1, 45.2, sowie kreuzförmige Verbindungsstücke 54 mit allseitig jeweils einer Anschlussstelle 45.1-45.4. Im Unterschied zu Figur 1 werden diese Bodengehäuse nicht vor Ort durch Austrennen der Blindverschlüsse angepasst, sondern bereits planungsseitig vorgesehen und vorab konfektioniert.

Die **Figuren 3a****-c** illustrieren ein erstes Bodengehäuse 31 in einer schematischen Seitenansicht. An zwei Anschlussstellen 45.1, 45.3 ist jeweils ein im Boden 60 verlegtes Leerrohr 25 angeschlossen, wobei es sich um beliebige Leerrohre des Leerrohrsystems 20 handeln kann. Die Leerrohre 25 sind in die jeweilige Anschlussstelle 45.1, 45.3 eingeschoben und darin verrastet. Ein Gehäuseinnenraum 61 des Bodengehäuses 31 wird horizontal von einer Seitenwand 62, in der die Anschlussstellen 45.1, 45.3 angeordnet sind, und vertikal von einer monolithisch mit der Seitenwand 62 geformten Deckelwand 63 begrenzt. Diese bildet einen Deckel 65, und das Bodengehäuse 31 wird so in den Boden 60 eingebaut, dass dieser unterhalb einer Oberkante 70 des Bodens liegt.

**Figur 3b** zeigt ein der Blindvorverlegung gemäß Figur 3a nachfolgendes Montagestadium. Oberhalb des Bodengehäuses 31 wurde aufgegraben, und der Deckel 65, also die Deckelwand 63, wurde entfernt. Stattdessen ist ein Montageaufsatz 75 aufgesetzt, dessen Oberkante im Wesentlichen bündig mit der Oberkante 70 des Bodens 60 liegt. Der Montageaufsatz 75 ist ein Vollkörper, bspw. aus Hartkunststoff oder Polymerbeton. Im vorliegenden Beispiel weist er an seinem oberen Ende einen Flansch 75.1 auf, mit dem er im Boden 60 aufliegt, was ein Hineinrutschen in den Gehäuseinnenraum 61 verhindert. Alternativ oder zusätzlich kann der Montageaufsatz 75 auch am Bodengehäuse 31 befestigt sein (hier nicht dargestellt). Vor dem Platzieren des Montageaufsatzes 75 wird eine Medienleitung 80 verlegt, vorliegend ein Datenkabel 81.

Die Medienleitung 80 ist in dem Gebäude 2 an das verbraucherseitige Ende eines Hausanschlusses angeschlossen, zur gebäudeaußenseitigen Verlegung wird das Leerrohrsystem 20 genutzt. Dabei wird das Bodengehäuse 31 bzw. der Gehäuseinnenraum 61 auch zur Verteilung genutzt, ist dort nämlich ein Kabelgehäuse 77 angeordnet, in dem die Medienleitung 80 in dem Leerrohrsystem weiterverzweigt wird. Der Montageaufsatz 75 weist eine Durchgangsöffnung 76 auf, durch diese wird die Medienleitung 80 vor dem Positionieren des Montageaufsatzes 75 hindurchgefädelt.

**Figur 3c** zeigt ein darauffolgendes Montagestadium, auf dem Montageaufsatz 75 ist ein Verbraucher- bzw. Verbraucheranschluss 90 montiert, vorliegend eine Stehle 91 mit Steckdosen 92. Diese weist einen Flansch 91.1 auf, der mit dem Montageaufsatz 75 verschraubt ist. Die Steckdosen 92 sind exemplarisch, ebenso könnte eine Ladestation für Elektrofahrzeuge oder auch generell ein anderer Verbrauchertyp angeschlossen werden, etwa eine Gartendusche im Falle einer Wasserleitung (oder ein Wasserhahn etc.).

Auch die **Figuren 4a****-c** zeigen ein Bodengehäuse in unterschiedlichen Ausbaustadien, wobei im Folgenden nur die Unterschiede vertieft diskutiert werden. Das Bodengehäuse 31 ist ebenfalls mit einem Deckel 65 verschlossen, dieser ist jedoch vorliegend als reversibel herausnehm- und einsetzbarer Deckel 83 ausgeführt. Ferner ist im gezeigten Beispiel nur ein Leerrohr 25 an das Bodengehäuse 31 angeschlossen. Dementsprechend wird der Gehäuseinnenraum 61 nicht zur Unterverteilung genutzt, sondern die Medienleitung 80 in Figur 4b direkt aus dem Montageaufsatz 75 heraus verlegt (kein Kabelgehäuse). Als Verbraucher bzw. Verbraucheranschluss 90 ist in diesem Fall eine Leuchte 95 montiert, die ebenfalls von einer Stehle 91 getragen wird.

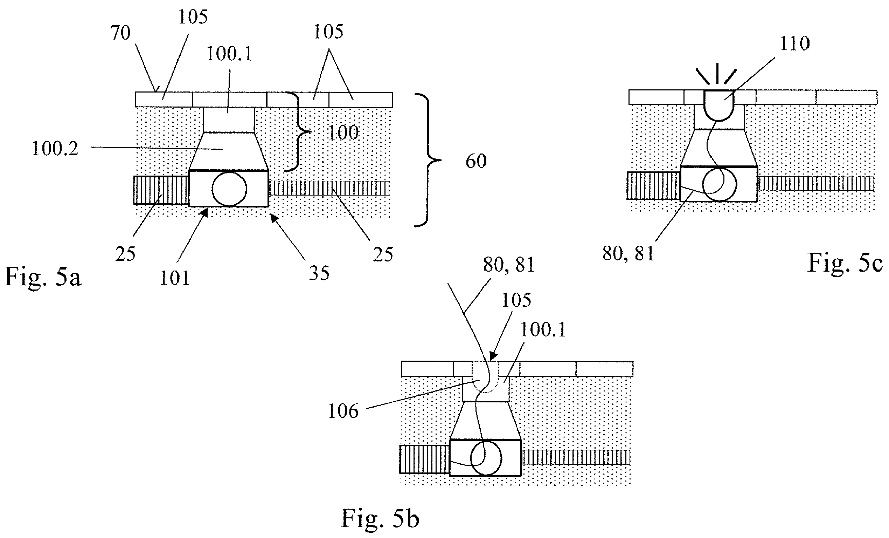

Die **Figuren 5a****-c** zeigen ein alternatives Bodengehäuse 35, das aus einer Straßenkappe 100 und einem Unterteil 101 aufgebaut ist. Die Straßenkappe 100 ist höhenverstellbar, gliedert sich also ihrerseits in Oberteil 100.1 und Unterteil 100.2, wobei Ersteres an Letzterem zur Anpassung einer vertikalen Aufbauhöhe verschiebbar geführt ist (teleskopierbar). Auch das Bodengehäuse 35 ist in den Boden 60 eingebaut, wobei dessen Oberkante 70 vorliegend von Pflastersteinen 105 gebildet wird (vgl. auch die Positionen der Einfahrt 6 in den Figuren 1 und 2).

In der Situation gemäß Figur 5b wurde ein Montageaufsatz 105 im Oberteil 100.1 der Straßenkappe 100 platziert. Dazu wurde ein das Oberteil 100.1 zuvor verschließender Deckel (nicht dargestellt) herausgenommen und durch den Montageeinsatz 100.1 ersetzt. Letzterer ist oberseitig mit einer Ausnehmung 106 gefasst, in diese wird dann eine Bodenleuchte 110 eingesetzt.

**Figur** 6 zeigt eine Hausausführung 120, die ein topfförmiges Rohbauteil 121 aufweist. Dieses wird beim Errichten des Gebäudes 2 in dessen Bodenplatte 123 eingegossen, wobei von unten die Leerrohre 9 angeschlossen sind und, wie aus den Aufsichten gemäß den Figuren 1 und 2 ersichtlich, zu unterschiedlichen Seiten des Gebäudes 2 verlaufen. Nach dem Betonieren der Bodenplatte 123 wird darauf eine Wand 124 errichtet, und in das Rohbauteil 121 kann später ein Dichteinsatz 124 eingesetzt werden. Dieser dichtet dann die in dem Leerrohrsystem 20 verlegte Medienleitung (hier nicht dargestellt) gegen das Rohbauteil 120.

## Patentansprüche

1. Verwendung eines Leerrohrsystems (20), welches ein erstes und ein zweites Leerrohr (21, 22) sowie ein erstes Bodengehäuse (31) aufweist,
wobei das Leerrohrsystem (20) außerhalb eines Gebäudes (2), aber auf dessen Grundstück (1) solchermaßen in einen Boden (60) eingebaut wird, dass
- das erste Leerrohr (21) das Gebäude und das erste Bodengehäuse (31) miteinander verbindet und
- sich das zweite Leerrohr (22) vom ersten Bodengehäuse (31) weg erstreckt,
wobei in dem Leerrohrsystem (20) eine Medienleitung (80) verlegt wird, die in dem Gebäude (2) an ein verbraucherseitiges Ende eines Medienhausanschlusses angeschlossen wird oder ist.

2. Verwendung nach Anspruch 1, bei welcher das erste und zweite Leerrohr (21, 22) in einer Aufsicht betrachtet gewinkelt zueinander in das erste Bodengehäuse (31) laufen.

3. Verwendung nach Anspruch 1 oder 2, bei welcher das erste Bodengehäuse (31) einen Deckel (65) aufweist, der einen Gehäuseinnenraum (61) des ersten Bodengehäuses (31) nach oben begrenzt, und solchermaßen in den Boden (60) eingebaut wird, dass der Deckel (65) unterhalb einer Oberkante (70) des fertigen Bodens (60) liegt.

4. Verwendung nach Anspruch 3, bei welcher in einem späteren Verfahrensstadium ein Bodenbereich über dem Deckel (65) entfernt und auf dem Bodengehäuse (31) als Sockel ein über die Medienleitung (80) angebundener Verbraucher oder Verbraucheranschluss (90) angeordnet wird.

5. Verwendung nach einem der vorstehenden Ansprüche, bei welcher das erste und zweite Leerrohr (21, 22) an eine jeweilige Anschlussstelle (45.1-45.4) des ersten Bodengehäuses (31) gesetzt und an der jeweiligen Anschlussstelle (45.1-45.4) verrastet werden.

6. Verwendung nach einem der vorstehenden Ansprüche, bei welcher das erste und zweite Leerrohr (21, 22) an eine jeweilige Anschlussstelle (45.1-45.4) des ersten Bodengehäuses (31) gesetzt werden, wobei zumindest eine der Anschlussstellen (45.1-45.4) zuvor mit einem monolithisch angeformten Blindverschluss verschlossen ist, der entfernt wird.

7. Verwendung nach einem der vorstehenden Ansprüche, bei welcher das erste Bodengehäuse (31), wenn es in den Boden eingebaut wird, von einer Aufstellvorrichtung getragen wird, die zur Anpassung einer vertikalen Position des ersten Bodengehäuses (31) höhenverstellbar ausgeführt ist.

8. Verwendung nach einem der vorstehenden Ansprüche, bei welcher das Leerrohrsystem (20) ein zweites Bodengehäuse (32) aufweist und solchermaßen in den Boden (60) eingebaut wird, dass das zweite Leerrohr (22) das erste und zweite Bodengehäuse (31, 32) miteinander verbindet.

9. Verwendung nach Anspruch 8, bei welcher das Leerrohrsystem (20) ein drittes Leerrohr (23) aufweist und solchermaßen in den Boden (60) eingebaut wird, dass das dritte Leerrohr (23) das zweite Bodengehäuse (32) und das Gebäude (2) verbindet.

10. Verwendung nach Anspruch 9, bei welcher in einer Aufsicht betrachtet das erste und das zweite Bodengehäuse (31, 32) auf unterschiedlichen Seiten (2.1, 2.2) des Gebäudes (2) angeordnet sind.

11. Verwendung nach einem der vorstehenden Ansprüche, bei welcher das Leerrohrsystem (20) insgesamt mindestens vier Bodengehäuse (31-35) aufweist, die auf dem Grundstück (1) in den Boden (60) eingebaut und über Leerrohre (21-25) miteinander verbunden sind, wobei zumindest einige der Bodengehäuse (31-35) in einer Aufsicht betrachtet entlang einer Einfassung und/oder eines Wegs (16) auf dem Grundstück (1) platziert sind.

12. Verwendung nach einem der Ansprüche 7 bis 11, bei welcher die Bodengehäuse (31, 32) zueinander baugleich sind.

13. Verwendung nach einem der vorstehenden Ansprüche, bei welcher das Leerohrsystem (20) in den Boden (60) eingebaut wird, anschließend ein Garten auf dem Grundstück (1) angelegt wird und erst danach die Medienleitung (80) in dem Leerrohsystem (20) verlegt wird.

14. Verwendung nach einem der vorstehenden Ansprüche, bei welcher das Leerrohrsystem (20) einen Vergusskörper (18) umfasst, der in eine Bodenplatte eines auf dem Grundstück (1) des Gebäudes (2) angeordneten Nebengebäudes (3) eingegossen und über ein sich unterhalb der Bodenplatte des Nebengebäudes (3) erstreckendes Leerrohr (19) an das übrige Leerohrsystem (20) angeschlossen ist.

15. Installationsanordnung, insbesondere als Ergebnis einer Verwendung nach einem der vorstehenden Ansprüche, mit
einem Leerrohrsystem (20), welches ein erstes und ein zweites Leerrohr (21, 22) sowie ein erstes Bodengehäuse (31) aufweist,
wobei das Leerrohrsystem (20) außerhalb eines Gebäudes (2), aber auf dessen Grundstück (1) solchermaßen in einen Boden (60) eingebaut ist, dass
- das erste Leerrohr (21) das Gebäude und das erste Bodengehäuse (31) miteinander verbindet und
- sich das zweite Leerrohr (22) vom ersten Bodengehäuse (31) weg erstreckt,
wobei in dem Leerrohrsystem (20) eine Medienleitung (80) verlegt ist, die in dem Gebäude (2) an ein verbraucherseitiges Ende eines Medienhausanschlusses angeschlossen ist.
